# EUROPEAN PATENT APPLICATION

(11) **EP 4 769 745 A1**
(43) Date of publication of application: **01.07.2026**
(21) Application number: 25820237.3
(22) Date of filing: 30.05.2025
(51) Int. Cl.: H01M 50/317, H01M 50/383

(54) **BATTERY MODULE**

(30) Priority: 03.06.2024 KR 20240072478
(71) Applicant: LG Energy Solution, Ltd., Seoul 07335 (KR)
(72) Inventor: KANG, Dahoon, Daejeon 34122 (KR); LEE, Suhang, Daejeon 34122 (KR); SONG, Seung Min, Daejeon 34122 (KR); CHOI, Jaeyoung, Daejeon 34122 (KR); HONG, Jaehyung, Daejeon 34122 (KR)
(74) Representative: Plasseraud IP
(86) International application number: PCT/KR2025/007495
(87) International publication number: WO 2025/254403

(57) **Abstract**

A battery module according to various embodiments may comprise: a battery cell stack in which two or more battery cells are stacked; a frame accommodating the battery cell stack and including a plurality of venting holes on one surface thereof; and a hole cover part configured to cover the plurality of venting holes, wherein the hole cover part comprises: a cover plate; a rotation shaft connected to one end of the cover plate and rotatably fixed to the frame; and an elastic member having one end connected to the rotation shaft and the other end connected to the frame. Other embodiments are also possible.

## Description

### Technical Field

Various example embodiments of the present disclosure relate to a battery module.

### Background Art

Secondary batteries are rechargeable and dischargeable, and are widely used in mobile devices such as digital cameras, mobile phones, and laptops. In particular, secondary batteries have recently attracted attention as energy sources for electric vehicles and energy storage systems (ESS).

In particular, as high capacity and high output power are required in electric vehicles or ESSs, large-capacity battery devices, formed by connecting a plurality of battery modules or battery packs storing a plurality of secondary batteries (in other words, battery cells) in a housing, are widely used.

However, such battery modules or battery devices that include a large number of battery cells may be vulnerable to a thermal chain reaction. For example, in the event of a thermal event such as thermal runaway occurring inside a battery module, if propagation of thermal runaway to other battery cells or battery modules is not properly suppressed, the event originated from a specific battery cell or battery module may trigger a chain reaction in surrounding battery modules, potentially resulting in a larger-scale fire or explosion.

### Detailed Description of the Invention

### Technical Goals

Various example embodiments of the present disclosure are provided to solve at least a portion of the issues described above in the related art. Provided are a battery module, which is enhanced to stably emit gas or flame to the outside while minimizing transfer of the gas or flame to other normal battery cells even when the gas or flame occurs in a specific battery cell, and a battery device including the same.

However, technical tasks to be solved by the present disclosure are not limited to those described above, and other tasks not explicitly mentioned will be clearly understood by those skilled in the art from various example embodiments of the present disclosure.

### Technical solutions

To achieve the goals described above, according to various example embodiments of the present disclosure, a battery module may include a battery cell stack in which two or more battery cells are stacked, a frame configured to accommodate the battery cell stack and including a plurality of venting holes on one surface of the frame, and a hole cover part configured to cover the plurality of venting holes. The hole cover part may include a cover plate, at least one rotation shaft connected to one end of the cover plate and rotatably fixed to the frame, and an elastic member having a first end connected to the rotation shaft and a second end connected to the frame.

In example embodiments, the at least one rotation shaft may be extend in a vertical direction to a stacking direction of the two or more battery cells.

In example embodiments, the hole cover part may allow a plurality of cover plates to be connected to the at least one rotation shaft, and the plurality of cover plates connected to the at least one rotation shaft may be configured to rotate integrally.

In example embodiments, the plurality of cover plates connected to the one at least one rotation shaft may be spaced apart from one another.

In example embodiments, the elastic member may be disposed in a space between the plurality of cover plates spaced apart from one another.

In example embodiments, the space between the plurality of cover plates spaced apart from one another may correspond to a sealing reinforcement area of the two or more battery cells.

In example embodiments, the at least one rotation shaft may be provided as a plurality of rotation shafts, and each of the rotation shafts may be spaced apart from one another in a stacking direction of the two or more battery cells.

In example embodiments, first cover plates connected to a portion of the plurality of rotation shafts may be configured to rotate in a first direction and open venting holes corresponding to the first cover plates, and second cover plates connected to a remaining portion of the plurality of rotation shafts may rotate in a second direction opposite to the first direction and open venting holes corresponding to the second cover plates.

In example embodiments, the elastic member connected to the portion of the plurality of rotation shafts may be configured to apply elastic force so that the first cover plates rotate in the second direction, and the elastic member connected to the remaining portion of the plurality of rotation shafts may be configured to apply elastic force so that the second cover plates rotate in the first direction.

In example embodiments, the cover plate may be configured to open or close at least a portion of the plurality of venting holes based on an internal pressure of the frame.

In example embodiments, the cover plate may include a first surface facing the two or more battery cells and a second surface facing a direction opposite to the first surface. The first surface may include a metallic material, and the second surface may include a material having greater fire-resistant performance compared to a material forming the first surface.

### Effects of the Invention

According to various example embodiments, even when a thermal event occurs in a specific battery cell, by preventing spread of flame or gas to surrounding normal battery cells and quickly emitting venting gas to the outside of a battery module, it is possible to delay spread or escalation of the thermal event and enhance structural stability of the battery module.

In addition, when there is no thermal event, it is possible to prevent foreign substances such as moisture or dust from being introduced into the battery module.

### Brief Description of Drawings

FIG. 1 is a perspective view of a battery module according to an example embodiment of the present disclosure.
FIG. 2 is a partial perspective view showing an enlarged portion A of FIG. 1.
FIG. 3 is a schematic view illustrating a venting hole and a hole cover part of a frame of a battery module according to an example embodiment of the present disclosure.
FIG. 4 is a schematic cross-sectional view of a battery module according to an example embodiment of the present disclosure.
FIG. 5 is a perspective view of a battery module according to an example embodiment of the present disclosure.
FIG. 6 is a schematic cross-sectional view of a battery module.
FIG. 7 is a schematic top view of a battery module according to an example embodiment of the present disclosure.
FIG. 8 is a perspective view of a battery module according to an example embodiment of the present disclosure.
FIG. 9 is a side view of the battery module of FIG. 8.
FIG. 10 is a schematic cross-sectional view of a battery module according to an example embodiment of the present disclosure.
FIG. 11A and FIG. 11B are a schematic top view and a side view for describing a position of a cover plate in a battery module according to an example embodiment of the present disclosure.

### Mode for Carrying Out the Invention

Before the present disclosure is described in detail, it is to be understood that terms or words used in the present disclosure and the accompanying claims may not be limited to general definitions or dictionary definitions. Also, the terms and words may be construed under a principle that an inventor may appropriately define a concept of a term in order to describe their invention in the best way. Example embodiments described in the present disclosure and configurations illustrated in the accompanying drawings are merely the most desirable example embodiments, and may not represent all of the technical spirit of the present disclosure. Thus, various equivalents and modifications that may replace the example embodiments and configurations may be present at the time of filing the application of the present disclosure.

The same reference numerals or symbols used in the accompanying drawings denote components that perform substantially the same function. For purposes of ease of description and understanding, the same reference numerals or symbols may be used to describe different example embodiments. That is, although components having the same reference numerals are illustrated in multiple drawings, such drawings do not necessarily represent the same example embodiment.

In the following description, singular forms are intended to include plural forms as well, unless the context clearly indicates otherwise. It should be understood that terms such as 'include' or 'comprise' are intended to specify the presence of features, integers, steps, operations, components, parts or combinations thereof stated in this specification, but do not preclude the presence or addition of one or more other features, integers, steps, operations, components, parts or combinations thereof.

In addition, in the following description, terms such as upper, top, lower, bottom, side, front, and rear are used based on orientations illustrated in the drawings, and it is to be understood that such terms may vary depending on changes in the orientation of a corresponding target.

In the present specification and claims, terms including ordinal numbers such as 'first', 'second', and the like may be used to distinguish between components. Such ordinal numbers are used merely to differentiate one component from another component, and should not be construed as limiting the meanings of terms. For example, components referred to with such ordinal numbers should not be construed as being limited to the order of use or arrangement indicated by the numbers. If necessary, the ordinal numbers may be replaced with one another.

Hereinafter, example embodiments of the present disclosure will be described with reference to the accompanying drawings. However, the spirit of the present disclosure is not limited to the example embodiments presented. For example, a person skilled in the art who understands the spirit of the present disclosure may propose other example embodiments within the scope of the disclosure by adding, modifying, or removing components, and such example embodiments should also be regarded as falling within the scope of the present disclosure. The shapes and sizes of elements illustrated in the drawings may be exaggerated for clarity of explanation.

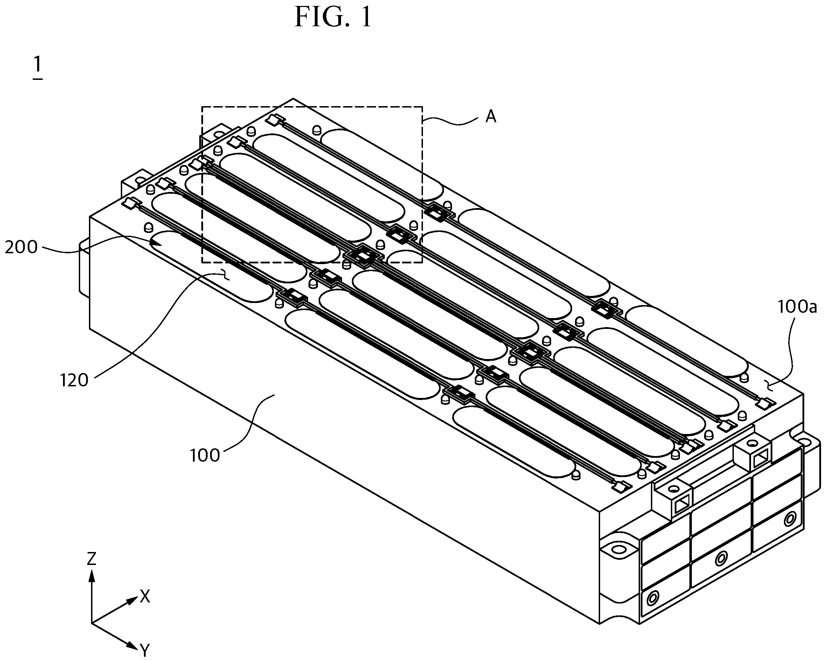

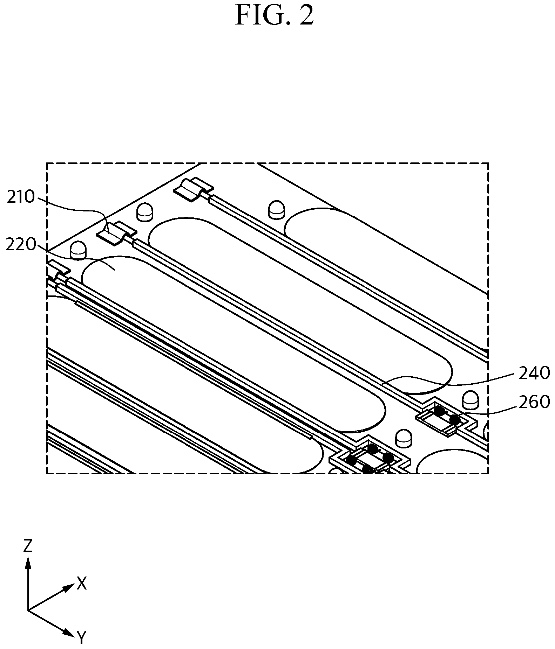

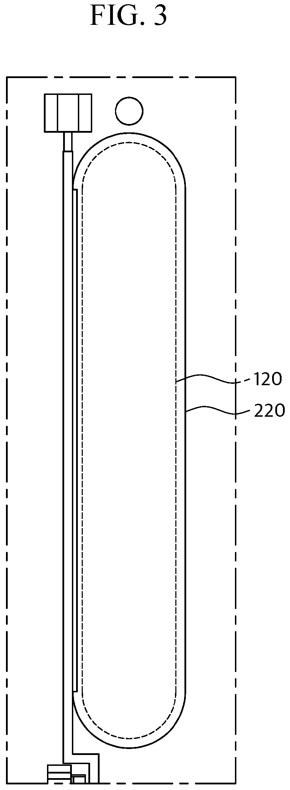

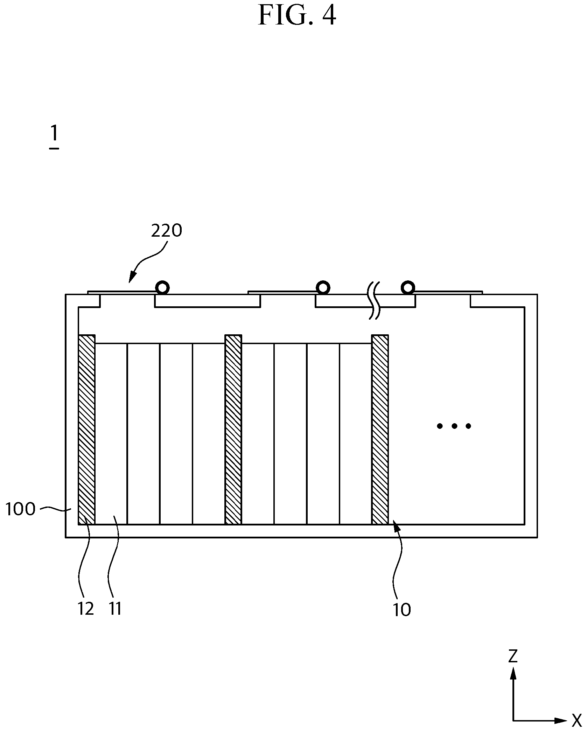

FIG. 1 is a perspective view of a battery module 1 according to an example embodiment of the present disclosure. FIG. 2 is a partial perspective view of a battery module 1 illustrating an enlarged portion A of FIG. 1. FIG. 3 is a diagram schematically illustrating a venting hole 120 and a cover plate 220 covering the venting hole 120 provided in a frame 100 according to an example embodiment of the present disclosure. FIG. 4 is a schematic cross-sectional view of a battery module according to an example embodiment of the present disclosure.

Referring to FIGS. 1 to 4, the battery module 1 according to various example embodiments may include a battery cell stack 10 and the frame 100 accommodating the battery cell stack 10.

According to various example embodiments, the battery cell stack 10 may include a plurality of battery cells 11.

For example, the battery cell 11 may refer to a secondary battery.

For example, the battery cell 11 may include an electrode assembly, an electrolyte, and a battery cell case.

For example, each of the battery cells 11 may be disposed to be stacked in one direction (for example, an X-axis direction of FIG. 4).

In an example embodiment, the battery cell 11 provided in the battery cell stack 10 may be a pouch-type battery cell.

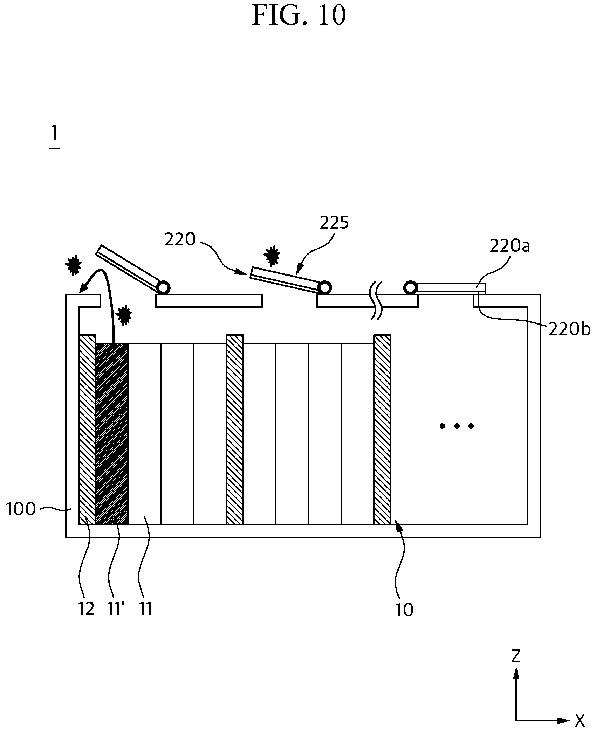

For example, the plurality of pouch-type battery cells 11 included in the battery cell stack 10 may be disposed, in a state in which wide surfaces (with reference to FIG. 10B) of an accommodation part accommodating the electrode assembly are stood toward a lateral direction, in a form of being stacked so that the wide surfaces of the accommodation part face one another. However, the present disclosure is not limited to the example above, and various example embodiments of the present disclosure may also be applied to cylindrical batteries, prismatic batteries, and the like.

Meanwhile, in an example embodiment, at an outermost end of the battery cell stack 10 or between the battery cells 11, an auxiliary member (or pad) 12 that blocks transmission of heat or shocks between the battery cells 11, or absorbs and cools heat from the battery cells 11 may be further disposed.

According to various example embodiments, the frame 100 may include a space that may accommodate the battery cell stack 10 therein.

For example, the frame 100 may include six plates and may be formed in a rectangular parallelepiped shape in substance.

For example, at least a portion of each plate may be integrally formed, or formed by being mutually coupled in a method of welding and bolting after being individually manufactured.

For example, the frame 100 may be formed of a material having excellent heat resistance and great rigidity (for example, metals like aluminum) for protecting the battery cell stack 10.

According to various example embodiments, the frame 100 may include a plurality of venting holes including the venting hole 120 on one surface.

For example, the frame 100 may include venting holes including the venting hole 120 on an upper surface 100a based on a disposition state of the battery module 1.

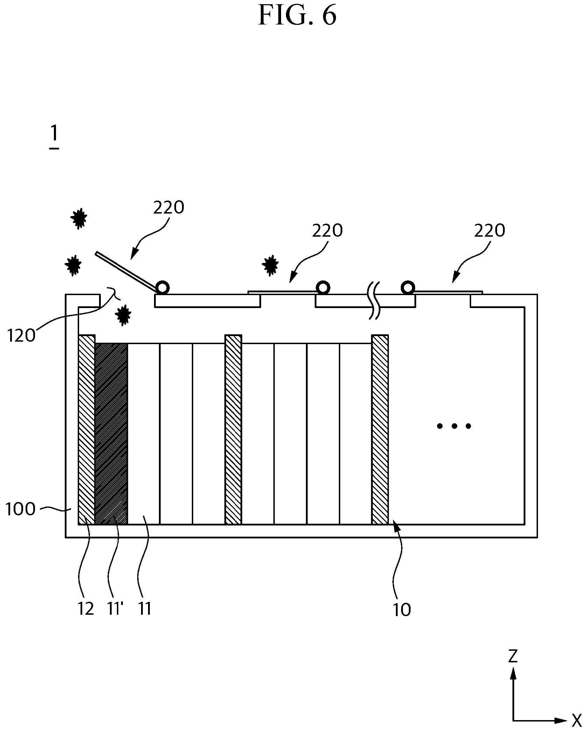

The venting hole 120 may be formed to penetrate the inside and outside of the frame 100, and may be provided to smoothly emit venting gas to the outside when the venting gas occurs inside the frame 100 as a specific battery cell (for example, 11' illustrated in FIG. 6) of the battery cell stack 10 is ignited.

As illustrated in FIG. 3, the venting hole 120 may have an elliptical shape, however, various example embodiments of the present disclosure are not necessarily limited to such a shape. For example, the venting hole 120 illustrated with dotted lines in FIG. 3 may be replaced with one or more circular or rectangular shapes.

Meanwhile, according to various example embodiments of the present disclosure, the battery module 1 may further include a hole cover part 200 configured to cover the venting hole 120.

For example, the hole cover part 200 may be configured to rotate in a direction to an end (for example, a direction to an outer side of the frame 100) to open and close based on pressure inside the frame 100 of the battery module 1.

For example, the hole cover part 200 may include at least one of the cover plate 220, a rotation shaft 240, and an elastic member 260.

For example, the cover plate 220 may be disposed to cover the venting hole 120 from the outside of the frame 100, and may be configured to have a size at least partially greater than or equal to that of the venting hole 120.

For example, the cover plate 220 may be formed of a metallic material having excellent heat resistance and a certain level of rigidity.

For example, the cover plate 200 may be formed of a material equal to that of the frame 100, or be formed of another material lighter than that of the frame 100.

The cover plate 220 may have an elliptical shape extending in one direction (for example, a Y-axis direction of FIG. 1) corresponding to a lengthwise direction of the battery cell 11. However, the example embodiments are not limited to the illustrated forms. In various example embodiments unlike those illustrated, the cover plate 220 may have a rectangular shape that has corners with a curvature partially or without a curvature.

Meanwhile, in various example embodiments, the cover plate 220 may have one side fixed to the rotation shaft 240. For example, the cover plate 220 and the rotation shaft 240 are mutually connected and rotate integrally.

For example, the rotation shaft 240 may extend in the lengthwise direction of the battery cell 11.

For example, the rotation shaft 240 may extend in a direction (for example, the Y-axis direction) perpendicular to a direction (that is, an X-axis direction of FIG. 4) in which the battery cells 11 are stacked on one surface (for example, the upper surface 100a) of the frame 100.

For example, each end 210 of the rotation shaft 240 may be connected to the frame 100 while being mounted in a rotatable form. For example, the rotation shaft 240 may be configured to rotate with the cover plate 220 by an internal pressure of the frame 100 or an elastic force of the elastic member 260.

Meanwhile, as illustrated in FIG. 1 and FIG. 4, the rotation shaft 240 in the example embodiments may be provided as a plurality of rotation shafts.

For example, the plurality of rotation shafts 240 may be disposed to be spaced apart from one another in a stacking direction of the battery cells 11. The plurality of rotation shafts 240 may move independently.

Meanwhile, a rotation direction of the cover plate 220 may be set differently according to a direction of an end of the cover plate 220 connected to the rotation shaft 240. For example, in various example embodiments of the present disclosure, at least a portion of a plurality of the cover plates 220 may allow the rotation shaft 240 to be disposed on a first side, and at least another portion may allow the rotation shaft 240 to be disposed on a second side opposite to the first side.

According to various example embodiments, the elastic member 260 may have one end connected to the rotation shaft 240, and the other end connected to the frame 100.

For example, the elastic member 260 may apply a predetermined elastic force in a direction in which the cover plate 220 connected to the rotation shaft 240 closes the venting hole 120.

For example, the elastic member 260 may be disposed at a point between both ends of the rotation shaft 240 and, for example, may be disposed in an empty area between cover plates 220 connected to a specific rotation shaft 240.

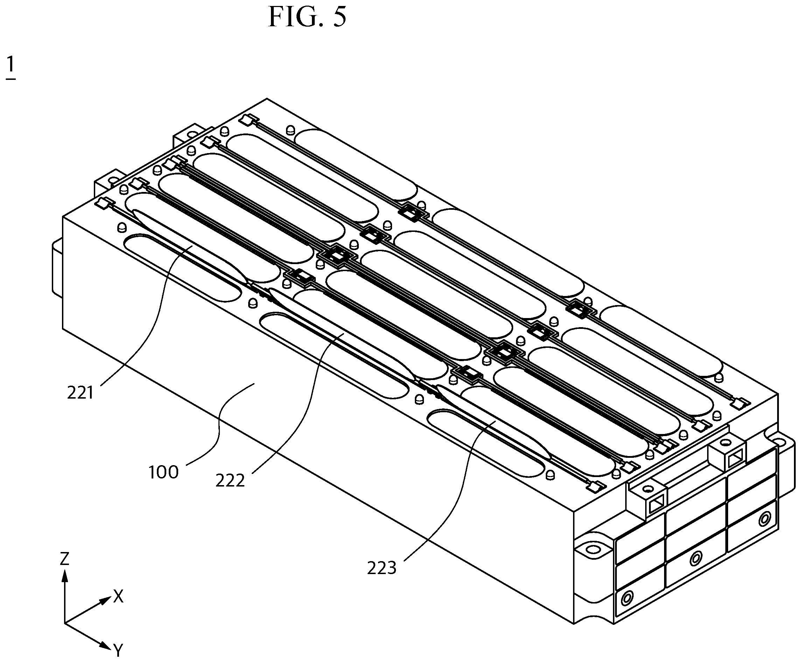

FIG. 5 is a perspective view of a battery module according to an example embodiment of the present disclosure. FIG. 6 is a schematic cross-sectional view of a battery module.

For example, FIG. 5 and FIG. 6 are diagrams for describing an open state of partial cover plates 220 (for example, 221, 222, and 223) in a battery module 1 described with reference to FIGS. 1 to 4.

Referring to FIG. 5 and FIG. 6, in the battery module 1 according to various example embodiments, one rotation shaft 240 may be connected to a plurality of the cover plates 220 (for example, 221, 222, and 223 of FIG. 5) In this case, each of the plurality of cover plates 220 connected to one rotation shaft 240 may rotate integrally with the rotation shaft 240.

Meanwhile, the plurality of cover plates 220 (for example, 221, 222, and 223) connected to one rotation shaft 240 may be disposed to be spaced apart from one another at a predetermined interval.

For example, an elastic member 260 may be disposed in at least a portion of a spaced space between the plurality of cover plates 220 (for example, 221, 222, and 223) connected to one rotation shaft 240. For example, the spaced space may have a relatively low possibility of venting gas emission and thus correspond to a sealing reinforcement area of each battery cell (11 and 11'). As such, in various example embodiments of the present disclosure, by having a point with the relatively low possibility of venting gas emission as the spaced space between the cover plates 220, it is possible to provide effects of preventing an unnecessary increase in a weight of the battery module 1 to enhance energy efficiency, and efficiently disposing the elastic member 260 in the space to provide an elastic force evenly to each area of the cover plates 220.

Referring back to FIG. 5 and FIG. 6, in the battery module 1 according to various example embodiments, as the specific battery cell 11' inside a frame 100 is ignited and venting gas is emitted, an internal pressure surrounding the ignited battery cell 11' may increase by the venting gas. A pressing force may be applied to the adjacent cover plate 220, so that the cover plate 220 may rotate outward from the frame 100 to open a venting hole 120.

For example, the cover plate 220 may rotate in a direction of opening the venting hole 120 from the outside of the frame 100 when a force of the venting gas pushing the cover plate 220 from the inside of the frame 100 is greater than an elastic force of the elastic member 260.

Meanwhile, in an example embodiment, the internal pressure inside the frame 100 may decrease again when a certain amount of the venting gas is emitted outward through the open venting hole 120, and accordingly, when the force of the venting gas pushing the cover plate 220 becomes less than the elastic force by the elastic member 260, the cover plate 220 may rotate in a direction of closing the venting hole 120 again.

In addition, in a case of the venting hole 120 adjacent to another battery cell 11 spaced at a certain interval or more apart from the ignited battery cell 11', as the internal pressure surrounding the venting hole 120 does not increase enough to push the cover plate 220, the cover plates 220 covering the venting hole 120 may maintain a closed state. Accordingly, even when the venting gas emitted from the ignited battery cell 11' is emitted to the outside of the frame 100 by an open cover plate 220', the emitted venting gas may not be introduced into another normal battery cell 11.

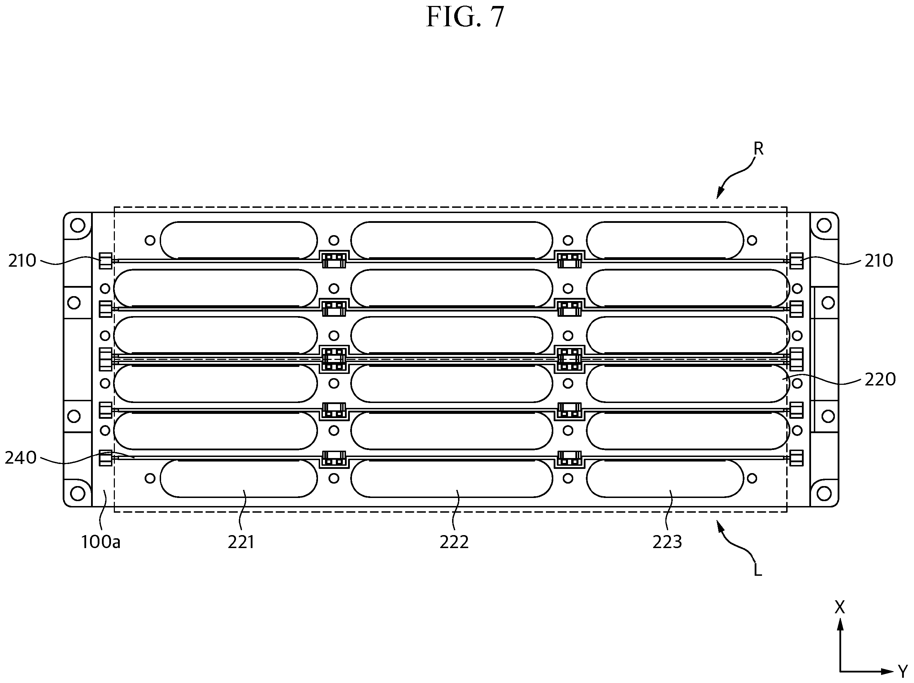

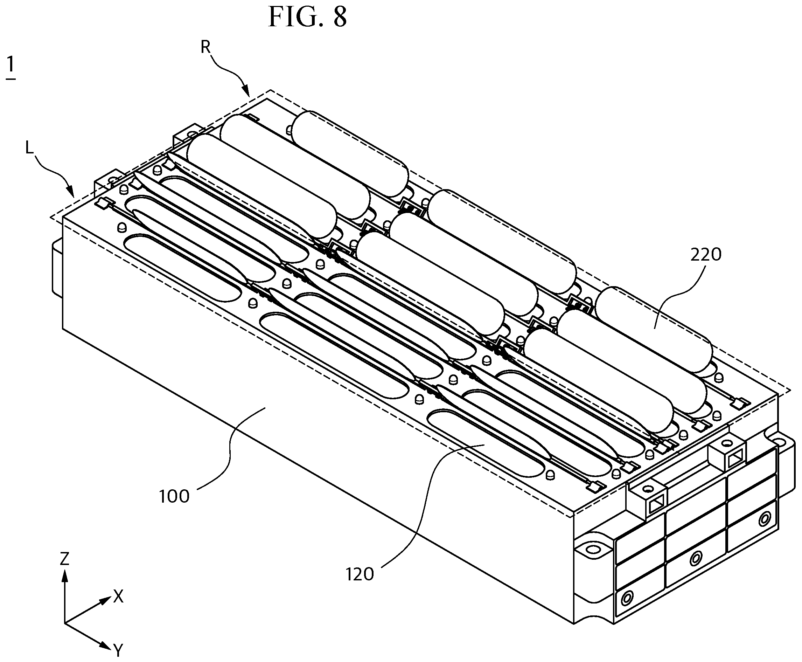

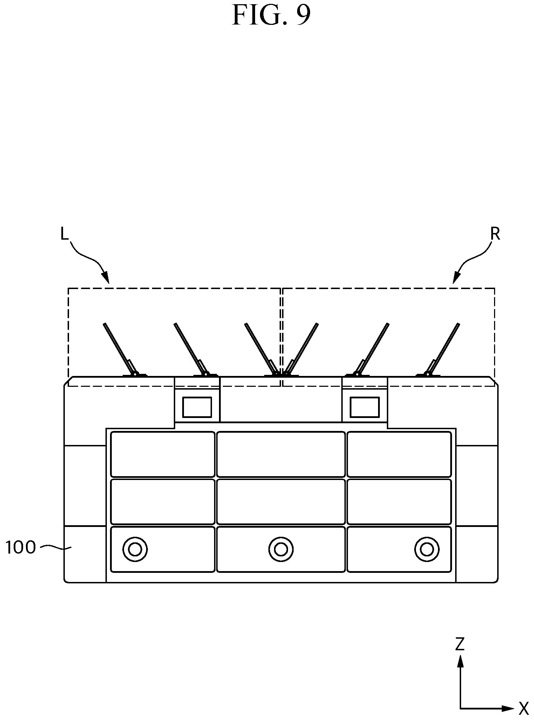

FIG. 7 is a schematic top view of a battery module according to an example embodiment of the present disclosure. FIG. 8 is a perspective view of a battery module according to an example embodiment of the present disclosure. FIG. 9 is a side view of a battery module illustrated in FIG. 8.

Referring to FIGS. 7 to 9, in a battery module 1 according to various example embodiments, at least a portion of cover plates 220 opens a venting hole 120 by rotating in a first direction, and at least another portion of the cover plates 220 may open the venting hole 120 by rotating in a second direction opposite to the first direction.

To this end, the at least a portion of the cover plates 220 (for example, a group of the cover plates 220 positioned at a portion L) may be connected to each rotation shaft 240 at a first side (for example, an end of an -X-axis direction), and the another portion of the cover plates 220 (for example, a group of the cover plates 220 positioned at a portion R) may be connected to each rotation shaft 240 at a second side (for example, an end of an +X-axis direction) opposite to the first side.

For example, the group of the cover plates 220 positioned at the portion L (referred to as a first cover plate group hereinafter) may be opened by rotating in the first direction (for example, a clockwise direction based on FIG. 9), and the group of the cover plates 220 positioned at the portion R (referred to as a second cover plate group hereinafter) may be opened by rotating in the second direction (for example, a counterclockwise direction based on FIG. 9) opposite to the first direction.

For example, each of the cover plates 220 rotating, when opened, in different directions may be configured to rotate, when opened, in a direction in which an outer surface (for example, a surface toward the outside of the frame 100) of each of the cover plates 220 becomes closer to one another. Accordingly, a gas emission direction formed by the opening of the first cover plate group may be different from a gas emission direction formed by the opening of the second cover plate group. According to such an opening structure, high-temperature gas or flame emitted by the opening of the cover plates may be guided to flow in a certain direction. In addition, even when the two groups of the cover plates 220 are opened individually, it is possible to prevent backflow of high-temperature gas or flame, emitted from the venting hole opened by one group of the cover plates 220, into the venting hole opened by the other group of the cover plates 220.

In an example embodiment, a maximum open angle of each of the cover plates 220 may be limited to form an acute angle. For example, the maximum open angle of the cover plate 220 may be limited by an elastic force applied from an elastic member 260 connected to the rotation shaft 240. To this end, an elasticity coefficient of the elastic member 260 may be set appropriately so that the maximum open angles of the cover plates 220 form an acute angle. Or, on a frame 100 of the battery module 1, a stopper member, which is disposed adjacent to the cover plate 220 or the rotation shaft 240 and prevents the cover plate 220 from rotating beyond a certain level, may be disposed. However, the maximum open angle of the cover plate 220 is not limited to that described above, and may be configured to be 90 degrees or more as needed.

FIG. 10 is a schematic top view of the battery module 1 according to an example embodiment of the present disclosure.

Referring to FIG. 10, a cover plate 220 configured to cover a venting hole 120 provided on one surface of a frame 100 in a battery module 1 may include a coating surface 225 formed of a material having excellent fire resistance.

According to various example embodiments, in the battery module 1, the cover plate 220 may include a first surface 221 facing battery cells 11 and 11' inside the frame 100, and a second surface 222 facing a direction opposite to the first surface 221. For example, the second surface 222 may correspond to a surface facing the outside of the frame 100.

For example, the first surface 221 and the second surface 222 may be formed of different materials. For example, the cover plate 220 may be configured in a form in which two layers made of different materials are bonded together, or in a form in which one surface of a specific layer is coated with a different material.

For example, the first surface 221 may be formed of a material having excellent rigidity, and the second surface 222 may be formed of a material having excellent fire resistance.

For example, the first surface 221 may be formed of a metallic material, and the second surface 222 may be formed of fiber-reinforced plastic having excellent fire resistance (such as basalt fiber).

As such, by forming the surface (for example, the second surface 222) of the cover plate 220 toward the outside of the frame 100 by using a material having excellent fire resistance, it is possible to prevent damage, such as melting of adjacent cover plates 220 in a closed state even when venting gas (or flame) is emitted from a specific ignited battery cell 11' and flows at the outside of the frame 100.

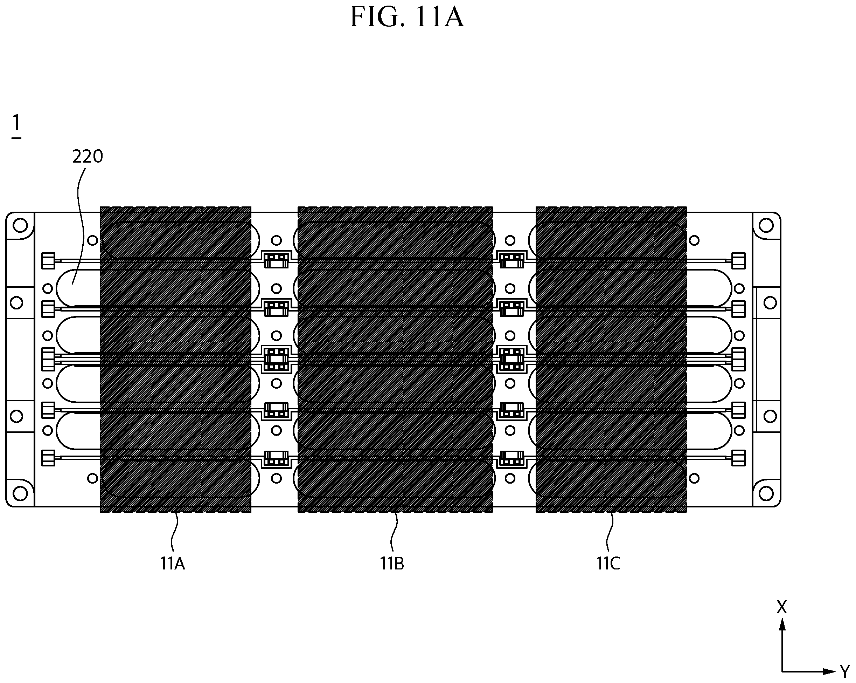

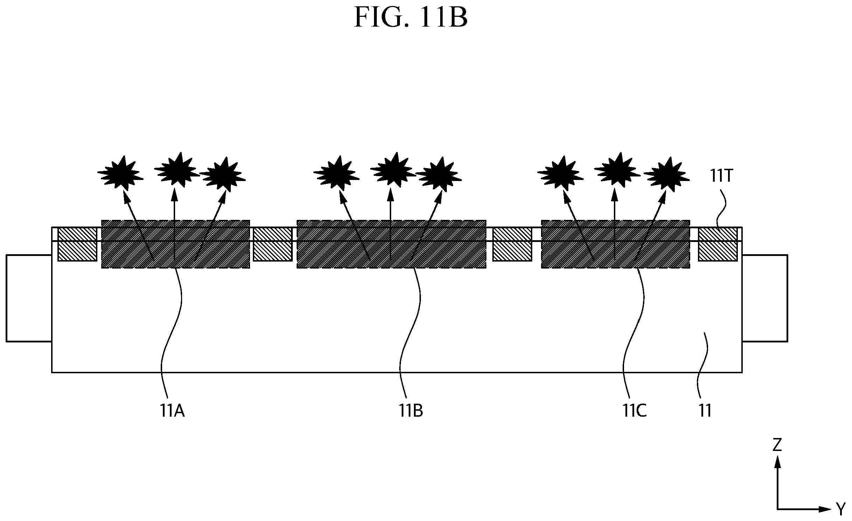

FIG. 11A and FIG. 11B are a schematic top view and a side view for describing a disposition of a cover plate 220 in the battery module 1 according to an example embodiment of the present disclosure.

Referring to FIG. 11A and FIG. 11B, according to various example embodiments, in the battery module 1, a plurality of cover plates 220 connected to one rotation shaft 240 may be spaced apart from one another in a lengthwise direction (for example, a Y-axis direction).

Meanwhile, in an example embodiment, the cover plates 220 connected to the one rotation shaft 240 may be positioned to correspond to areas 11A, 11B, and 11C from which venting gas is relatively more likely to be emitted from each battery cell 11.

For example, the areas 11A, 11B, and 11C vulnerable to emission of the venting gas may correspond to remaining areas except for a sealing reinforcement area 11T at an edge of the pouch-type battery cell 11. For example, the sealing reinforcement area 11T in the battery cell 11 may correspond to a partial area, additionally sealed by using a sealing tape or others, among a sealed edge portion of a cell case forming an exterior of the battery cell 11.

For example, a mutually spaced space (for example, a space between 11A and 11B and a space between 11B and 11C) between a plurality of the cover plates 220 connected to one rotation shaft 240 may be an area corresponding to the sealing reinforcement area 11T in the battery cell 11.

In various example embodiments of the present disclosure, by providing the spaced space between the plurality of axial-directional cover plates 220, it is possible to maximize structural rigidity and efficiency of a disposition structure of the battery module 1 while minimizing disruption to venting gas emission.

In addition, by disposing other components, such as an elastic member 260, in the spaced space between the plurality of axial-directional cover plates 220, it is possible to enhance disposition efficiency of components and enable the elastic member 260 to stably provide an elastic force to the cover plates 220 and the rotation shaft 240.

While the present disclosure has been described in detail with reference to various example embodiments, it is to be understood that the scope of the present disclosure is not limited thereto. Various modifications and alterations may be made without departing from the spirit and scope of the present disclosure as defined by the claims, and such variations will be apparent to those skilled in the art. Furthermore, an example embodiment described above may be implemented by omitting partial components, and the example embodiments may be combined to be implemented.

## Claims

1. A battery module comprising:
a battery cell stack in which two or more battery cells are stacked;
a frame configured to accommodate the battery cell stack and including a plurality of venting holes on one surface of the frame; and
a hole cover part configured to cover the plurality of venting holes,
wherein the hole cover part comprises:
a cover plate configured to open and close at least one of the plurality of venting holes;
at least one rotation shaft connected to one end of the cover plate and rotatably fixed to the frame; and
an elastic member having a first end connected to the at least one rotation shaft and a second end connected to the frame.

2. The battery module of claim 1, wherein the at least one rotation shaft extends in a vertical direction to a stacking direction of the two or more battery cells.

3. The battery module of claim 1, wherein the hole cover part configured to
allow a plurality of cover plates to be connected to the at least one rotation shaft, and
allow the plurality of cover plates connected to the at least one rotation shaft to rotate integrally.

4. The battery module of claim 3, wherein the plurality of cover plates connected to the at least one rotation shaft are spaced apart from one another.

5. The battery module of claim 4, wherein the elastic member is disposed in a space between the plurality of cover plates spaced apart from one another.

6. The battery module of claim 4, wherein a space between the plurality of cover plates spaced apart from one another corresponds to a sealing reinforcement area of the two or more battery cells.

7. The battery module of claim 1, wherein the at least one rotation shaft is provided as a plurality of rotation shafts, and each of the plurality of rotation shafts is spaced apart from one another in a stacking direction of the two or more battery cells.

8. The battery module of claim 7, wherein first cover plates connected to a portion of the plurality of rotation shafts are configured to rotate in a first direction and open venting holes corresponding to the first cover plates, and second cover plates connected to a remaining portion of the plurality of rotation shafts are configured to rotate in a second direction opposite to the first direction and open venting holes corresponding to the second cover plates.

9. The battery module of claim 8, wherein the elastic member connected to the portion of the plurality of rotation shafts are configured to apply elastic force so that the first cover plates rotate in the second direction, and the elastic member connected to the remaining portion of the plurality of rotation shafts are configured to apply elastic force so that the second cover plates rotate in the first direction.

10. The battery module of claim 1, wherein the cover plate is configured to open or close at least a portion of the plurality of venting holes based on an internal pressure of the frame.

11. The battery module of claim 1, wherein the cover plate comprises a first surface facing the two or more battery cells and a second surface facing in a direction opposite to the first surface, and
wherein the first surface includes a metallic material, and the second surface includes a material having greater fire-resistant performance compared to a material forming the first surface.
